# EUROPEAN PATENT APPLICATION

(11) **EP 4 560 899 A1**
(43) Date of publication of application: **28.05.2025**
(21) Application number: 24212014.5
(22) Date of filing: 11.11.2024
(51) Int. Cl.: H02K 11/25, H02K 3/50

(54) **MOTOR**

(30) Priority: 24.11.2023 JP 2023198782
(71) Applicant: TOYOTA JIDOSHA KABUSHIKI KAISHA, Aichi-ken, 471-8571 (JP)
(72) Inventor: NAGASAWA, Naohiro, Toyota-shi, 471-8571 (JP); OHIRA, Kengo, Toyota-shi, 471-8571 (JP); YOSHIKAWA, Makoto, Toyota-shi, 471-8571 (JP); TAKAMURA, Yasuyuki, Toyota-shi, 471-8571 (JP); URANO, Hiroaki, Toyota-shi, 471-8571 (JP); SUZUKI, Yasunori, Toyota-shi, 471-8571 (JP)
(74) Representative: TBK

(57) **Abstract**

A motor (2) includes a coil (10) that is wound on a stator (3), a bus bar (31) that is disposed facing the coil (10) and connected to the coil (10), a temperature sensor (20) that is disposed between the coil (10) and the bus bar (31), and that is also in contact with the coil (10), and a spring (35) that is disposed between the bus bar (31; 131) and the temperature sensor (20), and that presses the temperature sensor (20) against the coil (10).

## Description

### BACKGROUND OF THE INVENTION

### 1. Field of the Invention

The technology disclosed in the present specification relates to a motor.

### 2. Description of Related Art

In a motor that has a great output, a coil of a stator generates heat. A temperature sensor is attached to the stator or the coil of the motor, in order to measure temperature of the stator or the coil. Japanese Unexamined Patent Application Publication No. 2017-99177 (JP 2017-99177 A), U.S. Patent Application No. 2021/0278284, Japanese Unexamined Patent Application Publication No. 2023-89815 (JP 2023-89815 A), and WO 2011/117985 disclose examples of motors in which a temperature sensor is attached to a stator or a coil. In the motor according to JP 2017-99177 A, a temperature sensor is attached to a conducting wire extending from the coil. The motor according to U.S. Patent Application No. 2021/0278284 has a temperature sensor attached to the coil. In the motor according to JP 2023-89815 A, a temperature sensor is attached to a bus bar connected to the coil. The temperature sensor is disposed between the bus bar and a cover (cover that covers an end of a housing of the motor). A biasing member is disposed between the temperature sensor and the cover. The biasing member presses the temperature sensor against the bus bar. In the motor according to WO 2011/117985, a temperature sensor is attached to the coil. The temperature sensor is disposed between an inner face of a housing of the motor and the coil, and an elastic member is disposed between the temperature sensor and the inner face of the housing. The elastic member presses the temperature sensor against the coil. The elastic member presses the temperature sensor against the coil, and accordingly the temperature sensor is in close contact with the coil, and temperature of the coil is accurately measured.

### SUMMARY OF THE INVENTION

The present disclosure provides a structure that simplifies a process of attaching a spring that presses a temperature sensor against a coil.

A motor disclosed in the present specification includes a coil wound on a stator, a bus bar connected to the coil, a temperature sensor in contact with the coil, and a spring that presses the temperature sensor against the coil. The bus bar is disposed facing the coil. The temperature sensor is disposed between the coil and the bus bar. Note that "in contact with the coil" means in thermal contact with the coil. That is to say, a thermally conductive adhesive layer may be interposed between the coil and the temperature sensor. The spring is disposed between the bus bar and the temperature sensor. According to this structure, the bus bar and the spring can be attached to the coil at the same time. That is to say, according to this structure, the attaching process of the spring that presses the temperature sensor against the coil can be simplified. Note that fixing the spring to the bus bar enables the spring to be moved together with the bus bar. The spring can also be attached by automation equipment that handles and fixes the bus bar to the stator.

Details and further improvements of the technique disclosed in the present specification will be described in the section "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic structural diagram of a motor according to a first embodiment;
FIG. 2 is a diagram of a dashed line range II in FIG. 1 as viewed from a direction of arrow A; and
FIG. 3 is a diagram of surroundings of a temperature sensor of a motor according to a second embodiment.

### DETAILED DESCRIPTION OF EMBODIMENTS

### First Embodiment

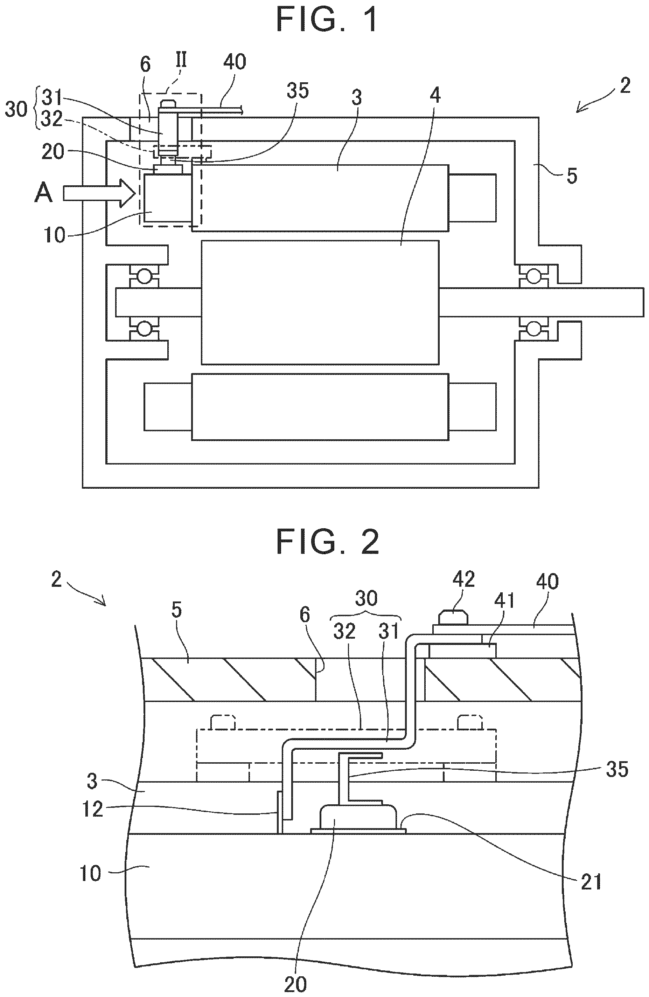

FIG. 1 illustrates a schematic cross-sectional view of a motor 2 according to a first embodiment. Although FIG. 1 is a cross-sectional view, hatching representing a cross-section is omitted from illustration. The motor 2 includes a stator 3, a rotor 4, and a housing 5 that accommodates these. The stator 3 is fixed to an inner face of the housing 5. The structure of the portion where the stator 3 is fixed is omitted from illustration. The rotor 4 is supported by the housing 5 via a bearing.

A coil 10 is wound on the stator 3. In FIGS. 1 and 2, individual windings of the coil 10 are omitted from illustration, and only an outer shape of the coil 10 is illustrated. A temperature sensor 20 is attached to an end of the coil 10. FIG. 2 is a diagram of a dashed line range II in FIG. 1 as viewed from a direction of arrow A. An attaching structure of the temperature sensor 20 will be described with reference to FIG. 2. Note that a signal line of the temperature sensor 20 is omitted from illustration.

The temperature sensor 20 is provided to measure temperature of the coil 10. The temperature sensor 20 is, for example, a thermistor or the like. The temperature sensor 20 is attached to the coil 10 via an adhesive resin 21. Examples of the adhesive resin include varnish, an adhesive sheet, or the like. Note that the temperature sensor 20 may be attached to the coil 10 without the adhesive resin.

On the other hand, a bus bar unit 30 is situated above the temperature sensor 20. The bus bar unit 30 includes a relay bus bar 31 that connects the coil 10 and an external bus bar 40, and a resin block 32 that supports the relay bus bar 31. A portion of the relay bus bar 31 is embedded in the resin block 32. In FIG. 2, the resin block 32 and bolts that fix the resin block 32 are indicated by imaginary lines. In FIG. 1, the resin block 32 is indicated by imaginary lines, and the bolts are omitted from illustration. The bus bar unit 30 is fixed to the stator 3 by bolts. A first end of the relay bus bar 31 is connected to a lead wire 12 of the coil 10, and a second end of the relay bus bar 31 is connected to an external bus bar 40. The relay bus bar 31 and the lead wire 12 are linked by welding. The relay bus bar 31 may be linked to the lead wire 12 by a bolt.

The relay bus bar 31 extends to outside of the housing 5 through a hole 6 provided in the housing 5. One end of the relay bus bar 31 reaches a terminal block 41 provided on an outer periphery of the housing 5. At the terminal block 41, the relay bus bar 31 and the external bus bar 40 are fastened together by a bolt 42. The external bus bar 40 is connected to an alternating current output terminal of an inverter that is omitted from illustration. Electric power is supplied to the coil 10 from the inverter that is omitted from illustration, through the external bus bar 40 and the relay bus bar 31.

As described above, the portion of the relay bus bar 31 is embedded in the resin block 32, and the resin block 32 is fixed to the stator 3. A portion of the relay bus bar 31 is situated facing the coil 10. The temperature sensor 20 is situated between the coil 10 and the relay bus bar 31. A first end of a spring 35 is embedded in the resin block 32, and a second end of the spring 35 is in contact with the temperature sensor 20. The spring 35 is situated between the temperature sensor 20 and the relay bus bar 31, and the spring 35 presses the temperature sensor 20 against the coil 10.

Reaction force of the spring 35 caused by pressing the temperature sensor 20 is supported by the relay bus bar 31. The relay bus bar 31 supports the reaction force of the spring 35, and accordingly the temperature sensor 20 is in close contact with the coil 10. Also, the spring 35 is fixed to the bus bar unit 30, and accordingly the spring 35 can also be attached at the same time as when the bus bar unit 30 is attached to the stator 3. A process of attaching the spring 35 is simplified. Note that more precisely, the spring 35 is fixed to the resin block 32 of the bus bar unit 30.

### Second Embodiment

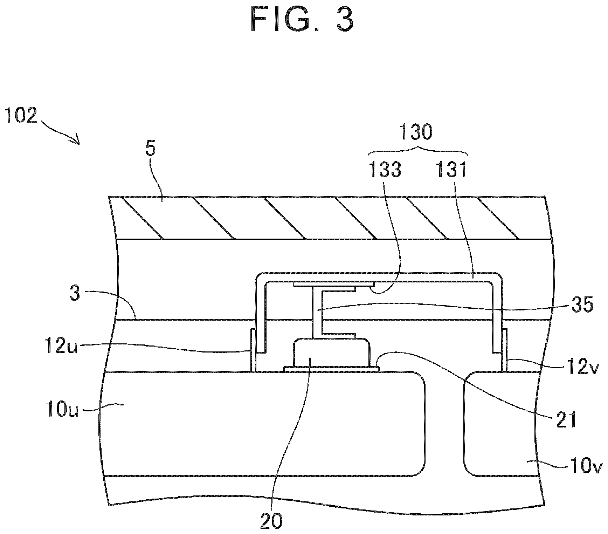

A motor 102 according to a second embodiment will now be described with reference to FIG. 3. FIG. 3 is a diagram of the motor 102 as viewed from the direction of the arrow A in FIG. 1, in the same way as with FIG. 2. The motor 102 is a three-phase alternating current electric motor, and a stator 3 has a plurality of coils 10u and 10v wound thereon. In FIG. 3 as well, the individual windings of the coils are omitted from illustration, and only the outer shapes of the coils are illustrated. The coil 10u is a U-phase coil, and the coil 10v is a V-phase coil. Although not illustrated in FIG. 3, the stator 3 is also provided with a W-phase coil. One end of each of the three coils is connected to one another at a neutral point, which is widely known. In FIG. 3, illustration of the housing is omitted.

In the motor 102, a neutral bus bar 131 connects the coil 10u and the coil 10v. More specifically, a first end of the neutral bus bar 131 is connected to a lead wire 12u of the coil 10u, and a second end of the neutral bus bar 131 is connected to a lead wire 12v of the coil lOv. The neutral bus bar 131 has a letter-U shape, with a bottom side of the letter U facing the coil 10u. The temperature sensor 20 is attached to the coil 10u. The temperature sensor 20 is fixed to the coil 10u by the adhesive resin 21. The temperature sensor 20 is situated between the bottom side of the letter-U of the neutral bus bar 131 and the coil 10u. The spring 35 is disposed between the neutral bus bar 131 and the temperature sensor 20. The spring 35 is fixed to the neutral bus bar 131 by an adhesive resin 133, and the spring 35 presses the temperature sensor 20 against the coil 10u. The neutral bus bar 131 and the adhesive resin 133 are herein collectively referred to as "bus bar unit 130". The spring 35 is fixed to the neutral bus bar 131 (bus bar unit 130).

Reaction force of the spring 35 caused by pressing against the temperature sensor 20 is supported by the neutral bus bar 131. The neutral bus bar 131 supports the reaction force of the spring 35, and accordingly the temperature sensor 20 is in close contact with the coil 10u. Also, the spring 35 is fixed to the neutral bus bar 131 (bus bar unit 130), and accordingly the spring 35 can also be attached at the same time as when the neutral bus bar 131 is attached to the coil 10u (stator 3). The process of attaching the spring 35 is simplified.

The neutral bus bar 131 is linked to the lead wires 12u and 12v by welding. The neutral bus bar 131 may be linked to the lead wires 12u and 12v by bolts. Also, the neutral bus bar 131 may be supported by the stator 3.

As described above, the spring 35 that presses the temperature sensor 20 against the coil is fixed to the bus bar 31 (131). This structure allows the spring 35 to be attached at the same time as the attaching process of the bus bar 31 (131). In other words, the process of attaching the spring 35 is simplified.

The features of the motor 2 (102) of the embodiment are listed below. The motor 2 (102) includes the coil 10 (10u) wound on a stator, the bus bars (relay bus bar 31, neutral bus bar 131) connected to the coil 10 (10u), the temperature sensor 20 that is in contact with the coil 10 (10u), and the spring 35. The bus bars (relay bus bar 31, neutral bus bar 131) are disposed facing the coil 10 (10u). The temperature sensor 20 is disposed between the coil 10 (10u) and the bus bars (relay bus bar 31, neutral bus bar 131). The spring 35 is disposed between the bus bars (relay bus bar 31, neutral bus bar 131) and the temperature sensor 20, and presses the temperature sensor 20 against the coil 10 (10u).

In the motor 102, the coils include a first coil (coil 10u) and a second coil (coil 10v). The first end of the neutral bus bar 131 is connected to the first coil (coil 10u), and the second end of the neutral bus bar 131 is connected to the second coil (coil 10v). The lead wire 12u of the first coil and the lead wire 12v of the second coil are situated with the temperature sensor 20 interposed therebetween. The neutral bus bar 131 that connects the lead wires 12u and 12v has a letter-U shape, with the bottom side of the letter U facing the temperature sensor 20.

The spring 35 is fixed to the bus bars (relay bus bar 31, neutral bus bar 131). More specifically, a portion of the relay bus bar 31 is embedded in the resin block 32, and a portion of the spring 35 is embedded in the resin block 32. In other words, the spring 35 is fixed to the bus bar unit 30 (130). When the spring 35 is fixed to the bus bar unit 30 (130), the spring 35 is also fixed to a predetermined position at the same time as a process of the bus bar unit 30 (130) being handled and fixed to the stator 3.

Points to be noted regarding the technology described in the embodiments will be described. The temperature sensor 20 is attached to an outer face of the coil 10 (10u) in a radial direction of the motor 2 (102). The temperature sensor 20 may be attached to an end face of the coil 10 (10u) in an axial direction of the motor. The temperature sensor 20 may be attached anywhere on the coil. For example, the temperature sensor may be mounted spanning the first coil and the second coil. At this time, adhesive resin may also be filled between the first coil and the second coil as well, so as to fill in a gap between the two coils.

The first end of the bus bar (relay bus bar 31, neutral bus bar 131) is connected to the lead wire 12 (12u) of the coil 10 (10u). The second end of the bus bar (relay bus bar 31) may be connected to another bus bar (external bus bar 40) or may be connected to a lead wire 12v of another coil 10v.

The motor 102 according to the second embodiment may have a structure in which the neutral bus bar 131 is supported by the resin block, and the resin block is fixed to the stator.

Although specific examples of the invention are described in detail above, these are merely exemplary and are not intended to limit the scope of the claims. The technology described in the claims includes various modifications and alterations of the specific examples exemplified above. The technical elements described in the present specification or the drawings exhibit technical utility alone or in various combinations, and are not limited to the combinations set forth in the claims as originally filed. The technology exemplified in the present specification or the drawings may also achieve a plurality of objects at the same time, and has technical utility in itself by achieving one of the objects.

## Claims

1. A motor comprising:
a coil (10; 10u, 10v) that is wound on a stator (3);
a bus bar (31; 131) that is disposed facing the coil (10; 10u, 10v) and connected to the coil (10; 10u, 10v);
a temperature sensor (20) that is disposed between the coil (10; 10u, 10v) and the bus bar (31; 131), and that is also in contact with the coil (10; 10u, 10v); and
a spring (35) that is disposed between the bus bar (31; 131) and the temperature sensor (20), and that presses the temperature sensor (20) against the coil (10; 10u, 10v).

2. The motor according to claim 1, wherein:
the coil (10u, 10v) includes a first coil (10u) and a second coil (10v); and
a first end of the bus bar (131) is connected to the first coil (10u), and a second end of the bus bar (131) is connected to the second coil (10v).

3. The motor according to claim 2, wherein a lead wire (12u) of the first coil (10u) and a lead wire (12v) of the second coil (10v) are situated such that the temperature sensor (20) is interposed between the lead wire (12u) and the lead wire (12v).

4. The motor according to any one of claims 1 to 3, wherein the spring (35) is fixed to the bus bar (31; 131).

5. The motor according to claim 1, further comprising: a resin block (32) fixed to the stator (3), wherein a portion of the bus bar (31) and a first end of the spring (35) are embedded in the resin block (32).

6. The motor according to claim 5, wherein a second end of the spring (35) is in contact with the temperature sensor (20).

7. The motor according to claim 2, wherein:
a first end of the spring (35) is fixed to the bus bar (131).

8. The motor according to claim 7, wherein a second end of the spring (35) is in contact with the temperature sensor (20).
